# FASCICULE DE BREVET EUROPEEN

(11) **EP 3 143 194 B1**
(45) Date de publication et mention de la délivrance du brevet: **06.12.2017**
(21) Numéro de dépôt: 15725835.1
(22) Date de dépôt: 07.05.2015
(51) Int. Cl.: D06M 15/227, B29B 15/12, C08J 5/04, C08J 5/06, C08J 5/24, D06M 15/263, D06M 15/277, D06M 15/507, D06M 15/564, D06M 15/59

(54) **PROCEDE D'IMPREGNATION DE FIBRES NATURELLES PAR UN POLYMERE EN DISPERSION AQUEUSE ET UTILISATION DESDITES FIBRES DANS LES MATERIAUX COMPOSITES**
VERFAHREN ZUM IMPRÄGNIEREN VON NATURFASERN MIT EINEM POLYMER IN WÄSSRIGER DISPERSION UND VERWENDUNG DIESER FASERN IN VERBUNDWERKSTOFFEN
METHOD FOR IMPREGNATING NATURAL FIBRES WITH A POLYMER IN AQUEOUS DISPERSION AND USE OF SAID FIBRES IN COMPOSITE MATERIALS

(30) Priorité: 12.05.2014 FR 1454210
(43) Date de publication de la demande: 22.03.2017
(73) Titulaire: Arkema France, 92700 Colombes (FR); Dehondt Technologies, 76330 Notre Dame de Gravenchon (FR)
(72) Inventeur: PINEAU, Quentin, F-27000 Evreux (FR); HOCHSTETTER, Gilles, F-94240 L'Hay Les Roses (FR); AUDENAERT, Marc, F-27300 Bernay (FR); DEHONDT, Guy, F-76170 Auberville La Campagne (FR); PHILIPPE, Edouard, F-76600 Le Havre (FR)
(86) Numéro de dépôt international: PCT/FR2015/051218
(87) Numéro de publication internationale: WO 2015/173496

(56) Documents cités:
- WO-A2-03/091006
- FR-A1- 2 781 492
- GB-A- 644 648

## Description

L'invention concerne un procédé d'imprégnation de mèches ou de rubans de fibres naturelles, en particulier de lin avec une dispersion aqueuse spécifique de polymère pour consolider les fibres au coeur du faisceau de fibres et améliorer leur tenue mécanique sans besoin de torsadage. L'invention concerne également les fibres traitées et leur utilisation dans des matériaux composites.

Les fibres naturelles comme les fibres de lin, de chanvre ou de sisal et en particulier de lin, ne sont pas des fibres continues mais discontinues liées entre elles par des fibrilles transversales. Ce fait crée un besoin de rechercher un moyen de renforcer la résistance mécanique des mèches ou des fils ou des rubans de fibres naturelles, contrairement au cas des fibres de verre ou de carbone qui sont continues. Pour les fibres pour textile, on procède en torsadant les fibres naturelles de façon à constituer un fil présentant une résistance mécanique suffisante pour l'utilisation visée. Le défi est d'obtenir cette tenue mécanique améliorée de la mèche de fibres, sans torsader les fibres. Lorsque l'on cherche à faire un renfort naturel pour fabriquer des composites, on cherche à préserver au maximum les qualités intrinsèques des fibres naturelles, notamment des fibres de lin et pour cette raison on ne torsade pas les fibres : les mèches de fibres, c'est-à-dire des faisceaux de fibres ou rubans de fibres naturelles sont alors constituées de fibres à usage technique présentant de meilleures propriétés mécaniques que les fibres à usage textile, car elles n'ont pas été endommagées par l'étape de torsion utilisée pour fabriquer les fibres à usage textile. En conséquence, l'obtention d'une mèche ou d'un ruban de fibres naturelles techniques, suffisamment résistantes pour ne pas se rompre pendant les opérations de fabrication de ces mèches ou des rubans, nécessite la réalisation de mèches ou de rubans de fibres de fort grammage exprimé en tex, nettement plus importants que ce qui se fait avec les fibres de verre ou de carbone. Un tex correspond à un grammage ou masse linéaire (par unité de longueur) égale à 1g/km ou 10⁻⁶ kg/m. Ce grammage plus important conduit à des renforts fibreux unidirectionnels ou des non tissés ou des tissus plus grossiers comportant des imperfections et affectant ainsi la résistance mécanique finale des composites à fibres naturelles telles que les fibres de lin. Il est également impossible avec ce type de renfort à base de fibres naturelles de réaliser des panneaux sandwich légers comportant des peaux en composite à fibres naturelles, en particulier à fibres de lin, de très faible épaisseur. Ainsi, la finalité d'un ruban ou d'une mèche de plus faible grammage en fibres de lin est de réaliser des composites à fibres naturelles quasi continues de plus grande résistance mécanique et de réaliser des panneaux sandwich légers comportant des renforts composites à base de fibres naturelles techniques, plus performants que ceux réalisés à partir de fibres textiles. Par conséquent, il y a un besoin de consolidation et de renforcement desdites mèches de fibres sans recourir à un torsadage des fibres et en cherchant un liant capable de pénétrer au coeur des mèches desdites fibres pour lier les fibres les unes aux autres avec une cohésion suffisante pour améliorer la tenue mécanique de la mèche.

Les composites thermoplastiques ont déjà, par leur matrice, l'avantage sur les composites à matrice thermodure d'être recyclables et de mise en oeuvre ou en forme facile. Le renfort par des fibres naturelles rajoute un avantage supplémentaire à la recyclabilité qui est l'origine végétale des fibres : c'est un élément important à considérer dans le contexte écologique où l'on vise l'utilisation de matières premières renouvelables respectant l'environnement. D'autre part, par rapport aux composites thermoplastiques avec renfort de fibres de verre, les composites thermoplastiques à renfort fibreux d'origine naturelle, en particulier à base de fibres de lin, permettent d'alléger lesdits composites pour une performance équivalente. En effet, la densité des fibres de lin (1,5) est d'environ 40% plus faible que celle des fibres de verre, d'où l'intérêt et besoin croissant d'avoir des mèches ou des rubans de fibres naturelles, en particulier de lin, avec une consolidation entre les fibres du faisceau et une tenue mécanique améliorée sans torsadage.

La demande GB 512558 décrit le traitement de fibres de coton par une dispersion de caoutchouc ou de résine de synthèse à faible taux de polymère allant de 2 à 10%, sans besoin de torsader les fils de coton pour une tenue mécanique en traction. Après imprégnation sous pression, le surplus de dispersion est éliminé par jet d'air pressurisé avec peu de particules de polymère restant sur les fibres après élimination du surplus et séchage des fibres. Aucune donnée sur le taux de polymère restant entre les fibres n'est précisée et aucun exemple précis n'est cité sur les conditions d'obtention et sur les résultats précis obtenus. Encore moins, ce document ne décrit le problème spécifique des fibres naturelles comme celles de lin, comme exposé ci-haut pour les besoins de renforcement de matrices thermoplastiques de matériaux composites thermoplastiques, ni ne suggère une solution spécifique audit problème.

D'autre part, la demande EP 0324680 décrit un procédé de préparation d'un semi-produit thermoplastique renforcé comme un matériau à base de polypropylène renforcé de fibres de verre. Selon ce document, le mouillage des fibres de renforcement est d'autant meilleur que les fibres restent à l'état unitaire et non pas à l'état de mèches ou de fils de base. Plus particulièrement, le procédé décrit comprend les étapes d'abord de préparation d'une composition aqueuse d'enduction comprenant une résine à l'état parcellaire et un agent régulateur de viscosité et en option des additifs, ensuite d'enduction d'une face d'un mat de fibres de renforcement dispersées à l'état unitaire avec la composition aqueuse d'enduction suivie d'un séchage pour obtenir un semi-produit en feuille et ensuite en option éventuellement la fusion de ladite résine. Aucun problème technique lié aux fibres naturelles comme celles de lin n'est mentionné, ni une solution à ce problème n'est suggérée dans ce document qui concerne plus celui d'un semi-produit à base d'une polyoléfine renforcé avec des fibres de verre.

FR 2 223 173 décrit également un procédé de préparation de feuilles ou de rubans de fibres imprégnés de résine à partir d'une dispersion aqueuse de résine, en particulier thermodurcissable, avec dispersion après épaississement à l'aide d'un agent épaississant. A nouveau, les fibres concernées ne sont pas des fibres naturelles comme celles de lin, ni le problème exposé, ni sa solution ne sont suggérés. Un procédé similaire est décrit par EP 0013244.

La demande WO 03/091006 décrit un procédé de fabrication d'un matériau composé de fibres naturelles pré imprégnées de résine organique et se présentant sous forme de fil ou de ruban solide et souple. Les fibres naturelles incluent les fibres de lin, de chanvre ou de sisal ou de toute autre plante fibreuse.

FR 2781492 décrit un matériau composite thermoplastique comprenant des fibres d'origine végétale comme les fibres de lin et/ou de chanvre, comme fibres incorporées dans un polymère thermoplastique à l'état fondu.

La présente invention permet de résoudre le problème technique exposé ci-haut par rapport à l'état de la technique avec un procédé spécifique d'imprégnation de mèches ou de rubans de fibres naturelles où ce problème se pose, cette imprégnation ayant lieu à coeur par une dispersion aqueuse de polymère spécifique permettant ainsi audit polymère de lier au coeur du faisceau de fibres, entre elles, les fibres desdites mèches ou desdits rubans et de les consolider par cette imprégnation spécifique avec les fines particules de polymère utilisées après fusion. Cette imprégnation peut conduire plus loin et directement à un renfort fibreux pré imprégné, mèche ou ruban de faible grammage utilisable pour la fabrication de matériaux composites.

La flexibilité de la solution de la présente invention lui permet d'être intégrée dans une ligne continue de fabrication dudit renfort fibreux à base de fibres naturelles comme les fibres de lin, allant du traitement des fibres naturelles issues des champs, à la fabrication d'une mèche ou d'un ruban pré imprégné et calibré.

Le premier objet de l'invention concerne un procédé d'imprégnation de mèches ou de rubans de fibres naturelles, en particulier de lin, par une dispersion aqueuse spécifique de polymère.

L'invention concerne également les fibres ainsi traitées, leur utilisation et des matériaux composites ou articles obtenus à partir desdites fibres ainsi traitées.

Donc, le premier objet de l'invention concerne un procédé d'imprégnation, en particulier en ligne, de mèches ou de rubans de fibres naturelles, en particulier de fibres de lin qui comprend au moins les étapes successives suivantes :
i) imprégnation desdites mèches ou desdits rubans desdites fibres par immersion dans un bain contenant une dispersion aqueuse fine de polymère ou par pulvérisation de ladite dispersion aqueuse, ladite imprégnation étant suivie du
ii) séchage desdites mèches ou desdits rubans au moyen d'un système de chauffage, avec au cours dudit séchage l'élimination progressive de l'eau et au fur et à mesure la fusion dudit polymère, l'enrobage desdites mèches ou rubans par ledit polymère fondu incorporé au coeur du faisceau des fibres desdites mèches ou desdits rubans, liant entre elles lesdites fibres
iii) en option, mise en forme finale desdites mèches ou rubans ainsi traités, de préférence sous forme aplatie de rubans unidirectionnels ou de mèches de section cylindrique ou sous forme de tissus pré imprégnés ou sous forme d'assemblage de rubans, en particulier pour faire des préformes
iv) refroidissement desdites mèches ou desdits rubans ainsi traités, et avec ladite dispersion aqueuse de polymère comprenant au moins un polymère amorphe ou semi-cristallin et si amorphe avec une Tg allant de 50°C à 175°C, de préférence de 80°C à 150°C et si semi-cristallin avec une température de fusion allant de 70°C à moins de 220°C, de préférence supérieure à 90°C et jusqu'à 190°C, plus préférentiellement de 100°C à 170°C, ladite dispersion comprenant un taux en poids dudit polymère allant de 5% à 50% avec des particules en dispersion ayant une taille moyenne en nombre inférieure à 10000 nm, de préférence allant de 50 à 5000 nm et plus préférentiellement de 50 à 500 nm.

La dispersion de polymère selon l'invention est une dispersion fine de particules de polymère par la limitation de la taille desdites particules, de sorte que lesdites particules diffusent facilement au coeur du faisceau des fibres naturelles pour consolider (lier entres elles) lesdites fibres.

Ladite dispersion dans sa signification, selon la présente invention, comprend à la fois une dispersion de polymère dispersé à l'aide d'un dispersant ou émulsifiant ou tensioactif après sa polymérisation par quelque technique que ce soit, qu'on appellera aussi « post-émulsion » ou l'auto dispersion sans dispersant, émulsifiant ou tensioactif par la présence de fonctions ioniques ou précurseurs de fonctions ioniques, par exemple fonctions acides carboxyliques neutralisées sous forme de sel où le terme dispersion aqueuse de polymère englobe également une émulsion de polymère ou « latex de polymère » obtenu par la technique bien connue à l'homme du métier comme les techniques précédentes de polymérisation radicalaire en émulsion dans l'eau à partir d'une composition de monomères en émulsion à l'aide d'au moins un tensioactif.

Ladite dispersion aqueuse peut également être sous forme diluée par l'eau après son obtention et avec le taux de polymère (aussi appelé extrait sec ou taux de solides) maintenu dans la plage définie selon l'invention (5 à 50%).

Plus particulièrement, concernant le polymère de ladite dispersion, il est choisi parmi : (co)polyamides, (co)polyesters, polyuréthanes, poly(méth)acrylates, polymères fluorés ou polyoléfines. Les polymères de ladite dispersion, selon l'invention, peuvent être des homopolymères ou des copolymères à base d'au moins deux monomères ou motifs répétitifs ou ils peuvent être des mélanges de polymères compatibles entre eux. « Polymères compatibles » signifie miscibles entre eux, sans séparation de phase.

Selon une option dudit procédé, ledit polymère est choisi parmi un poly(méth)acrylate y compris sous forme de copolymère (méth)acrylique, fonctionnalisé par des fonctions acides ou choisi parmi un polymère fluoré y compris sous forme de copolymère fluoré, en particulier greffé avec des fonctions réactives et ladite dispersion aqueuse est une dispersion aqueuse obtenue par polymérisation en émulsion en présence d'un tensioactif et lesdites fonctions réactives (dudit polymère fluoré) pouvant réagir avec lesdites fibres naturelles et plus particulièrement, avec les fibres de lin.

On appellera dispersions acryliques ou émulsions acryliques, les dispersions avec polymère poly(méth)acrylate ou copolymère (méth)acrylique. Le terme « acrylique » dans sa signification générale, selon l'invention, à défaut d'indication spécifique, signifie à la fois acrylique et/ou méthacrylique.

Comme exemple de dispersion aqueuse acrylique, on peut citer la dispersion à base d'un copolymère de méthacrylate de méthyle et d'acrylate de butyle et d'acide acrylique.

Comme exemple de dispersion de polymère fluoré, on peut citer les dispersions aqueuses de PVDF (polyvinylidène fluorure) ou de copolymères de VDF avec d'autres oléfines, en particulier fluorées. Le tensioactif peut être un tensioactif fluoré. Comme exemple de tensioactif fluoré, on peut citer le sel d'ammonium d'acide octanoïque perfluoré. Le polymère fluoré greffé peut être obtenu par greffage dudit polymère fluoré avec par exemple l'anhydride maléique.

Selon une autre possibilité, ledit polymère est un polyuréthane formé à partir d'un prépolymère polyisocyanate comprenant un groupement ionique, ledit prépolymère étant dispersé dans l'eau avec extension de chaîne en milieu aqueux. En général, un tel prépolymère est obtenu par réaction d'un diol porteur d'une fonction acide carboxylique ou acide sulfonique avec un polyisocyanate, en particulier diisocyanate et éventuellement un autre diol sans fonction ionique, en milieu organique, en particulier avec un solvant facile à éliminer par évaporation. La dispersion dans l'eau est réalisée après neutralisation au moins partielle de ladite fonction acide avec une base minérale telle que l'ammoniaque ou un hydroxyde de métal alcalin ou une base organique telle qu'une amine tertiaire. L'extension de chaîne peut être réalisée avec un agent d'extension de chaîne portant des fonctions réactives avec les fonctions isocyanates dudit prépolymère, comme par exemple une diamine. Le solvant organique peut être éliminé par évaporation pour récupérer la dispersion aqueuse finale de polyuréthane dont l'extrait sec peut être ajusté par dilution dans l'eau.

Selon une autre possibilité, selon l'invention, ledit polymère est dispersible ou dispersé sous forme de poudre en milieu aqueux sans tensioactif et de préférence ledit polymère à l'état de poudre porte des groupements ioniques ou des groupements précurseurs de groupements ioniques, en particulier par neutralisation dans l'eau lors de la préparation de ladite dispersion.

En particulier, ledit polymère est un copolyamide, de préférence porteur de groupements terminaux carboxy, sulfoniques ou de groupements terminaux amines, plus préférentiellement ayant un taux desdits groupements allant de 50 à 500 µeq/g (microéquivalents/g), en particulier 100 à 250 µeq/g. Selon une option, ledit copolyamide porte des groupements amines, de préférence amines primaires, neutralisés sous forme d'ammonium par un acide, de préférence un acide de Bronsted, plus préférentiellement phosphoré.

Selon une autre option, ledit copolyamide porte des groupements carboxy neutralisés sous forme de sel, par une base.

Selon une option particulière, le copolyamide est semi-cristallin et a une température de fusion inférieure ou égale à 150°C.

Ledit copolyamide semi-cristallin est une option de polymère particulièrement préférée selon la présente invention. Ledit copolyamide peut comprendre au moins un des motifs suivants : 5.9, 5.10, 5.12, 5.13, 5.14, 5.16, 5.18, 5.36, 6, 6.9, 6.10, 6.12, 6.13, 6.14, 6.16, 6.18, 6.36, 9, 10.6, 10.9, 10.10, 10.12, 10.13, 10.14, 10.16, 10.18, 10.36, 11, 12, 12.6, 12.9, 12.10, 12.12, 12.13, 12.14, 12.16, 12.18, 12.36, 6.6/6, 11/10.10 et leurs mélanges et de préférence comprend au moins un motif parmi : 11, 12, 10.10, 6, 6.10, 6.12, 10.12, 6.14 et/ou 6.6/6, 11/10.10 et leurs mélanges.

Selon une autre possibilité, ledit copolyamide peut être choisi parmi : PA 6/6.6/12, PA 6/6.6/11/12, PA 6/12, PA 6.9/12, PA Pip.9/Pip.12/11, PA 6/IPD.6/12, PA IPD.9/12, PA6/MPMD.12/12, PA 6/6.12/12, PA 6/6.10/12, PA 6/Pip.12/12, PA 6/6.6/6.10/6.I, PA 6.10/Pip.10/Pip.12, PA 6/11/12, PA Pip.12/12, PA IPD.10/12, PA Pip.10/12, PA 6/11, PA Pip.10/11/Pip.9, PA 6/6.6/6.10, PA 6/6.10/6.12 et leurs mélanges. IPD est l'isophorone diamine et Pip la pipérazine.

Selon une autre possibilité, ledit copolyamide peut être amorphe semi-aromatique et choisi parmi :
- 6.I, 8.I, 9.I, 10.I, 11.I, 12.I, 6.I/9.I, 9.I/10.I, 9.I/11.I, 9.I/12.I, 9/6.1, 10/6.I, 11/6.I,12:6.I, 10/9.I, 10/10.I, 10/11.I, 10/12.I, 11/9.I, 11/10.I, 11/11.I, 11/12.I, 12/9.I, 12/10.I, 12/11.I, 12/12.I, 6.10/6.I, 6.12/6.I, 9.10/6.I, 9.12/6.I, 10.10/6.I, 10.12/6.I, 6.10/9.I, 6.12/9.I, 10.I/6.I, 10.10/9.I, 10.12/9.I, 6.10/10.I, 6.12/10.I, 9.10/10.I, 9.12/10.I, 10.10/10.I, 10.12/10.I, 6.10/12.I, 6.12/12.I, 9.10/12.I, 9.12/12.I, 10.10/12.I, 11/6.I/9.I, 11/6.I/10.I, 11/6.I/11.I, 11/6.I/12.I, 11/9.I/10.I, 11/9.I/11.I, 11/9.I/12.I, 11/10.I/11.I, 11/10.I/12.I, 11/11.I/12.I, 6.I/10.I, 6.I/11.I, 6.I/12.I, 10.I/11.I, 10.I/12.I, 11.I/12.I, 12/6.I/10.I, 12/6.I/11.I, 12/6.I/12.I, 12/9.I/10.I, 12/9.I/11.I, 12.9.I/12.I, 12/10.I/11.I, 12/10.I12.I, 12/11.I/12.I, 12/11.I/12.I,
- polyamides terpolymères précédents avec 12/ remplacé par 9/, 10/, 6.10/, 6.12/, 10.6/, 10.10/, 10.12/, 9.10/ et 9.12/,
- tous les polyamides cités ci-haut, avec l'isophtalique (I) remplacé partiellement jusqu'à 40% mol par le téréphtalique (T), le naphtalène 2,6 dicarboxylique et/ou par le 1,3- ou le 1,4- CHDA (acide cyclohexane dicarboxylique), avec tout ou partie des diamines aliphatiques linéaires pouvant être remplacées par des diamines aliphatiques ramifiées, de préférence parmi triméthyl hexaméthylène diamine TMD, méthyl pentaméthylène diamine MPMD, méthyloctaméthylènediamine (MOMD) ou par des diamines cycloaliphatiques, de préférence parmi BMACM, BACM et/ou IPD ou des diamines arylaliphatiques, de préférence m- ou p-xylylène diamines,
- tous les polyamides cités ci-haut où l'isophtalique (I) est remplacé partiellement ou totalement par un diacide aliphatique linéaire ou ramifié en C₆ à C₁₈ et en même temps avec remplacement total ou partiel de la diamine aliphatique par une diamine cycloaliphatique parmi BMACM, BACM et/ou IPD.

BMACM est la bis(3-méthyl, amino cyclohéxyl) méthane, BACM est la bis(aminocyclohéxyl) méthane et IPD (ou aussi notée IPDA) est la isophorone diamine.

Plus particulièrement, ledit polymère est semi-cristallin avec une température de fusion Tf supérieure à 90°C, de préférence d'au moins 100°C et les particules de ladite dispersion ont une taille moyenne en nombre allant de 50 à 5000 nm, de préférence de 50 à 500 nm. Cette taille des particules est mesurée selon méthode par diffraction laser (Coulter LS600) ou par microscopie électronique à balayage.

La température de transition vitreuse Tg des polymères utilisés est mesurée à l'aide d'un calorimètre différentiel à balayage (DSC), après un deuxième passage en chauffe, suivant la norme ISO 11357-2. La vitesse de chauffage et de refroidissement est de 20°C/min. La température de fusion Tf et la température de cristallisation Tc sont mesurées par DSC, après une première chauffe, selon la norme ISO 11357-3. La vitesse de chauffage et de refroidissement sont de 20°C/min.

Concernant le taux en poids sec dudit polymère par rapport au poids sec desdites fibres, il peut varier de 0,5% à moins de 50%.

Plus particulièrement, ledit taux en poids peut varier de 0,5 à 10% quand ladite imprégnation se limite à la consolidation desdites fibres entre elles, en plus d'un ensimage. Dans le cas de la consolidation des fibres, leur énergie de cohésion augmente du fait de la liaison desdites fibres entre elles au coeur du faisceau de fibres. Dans le cas d'un ensimage, l'effet recherché est différent et lié à une compatibilisation desdites fibres avec la matrice polymère du composite par l'interface créée autour des fibres avec un polymère spécifique améliorant la compatibilité des fibres avec la matrice pour une meilleure adhésion des fibres à la matrice polymère du matériau composite.

Selon une variante du procédé de l'invention, ledit taux de polymère est supérieur à 25% et inférieur à 50% et de préférence de 30% à 45% quand ladite imprégnation en plus de ladite consolidation conduit à un pré imprégné desdites fibres, utilisé ou utilisable séparément ou successivement, c'est-à-dire successivement à ladite imprégnation, dans la fabrication de matériaux composites.

De préférence, la viscosité de ladite dispersion à 23°C varie de 10 à 1000 mPa.s. La méthode utilisée pour la mesure de viscosité est la méthode Brookfield (viscosité Brookfield selon ISO 2555).

Selon un cas particulier, ledit polymère est biosourcé et en particulier est un (co)polyamide à base de monomères biosourcés. « Copolyamide à base de » signifie ici qu'il comprend au moins un monomère biosourcé. Comme exemples de polyamides biosourcés, on peut citer les polyamides comprenant des motifs de PA11 ou de PA10.10.

Lesdites fibres naturelles sont de préférence des fibres longues, en particulier des fibres longues de lin, avec L/D > 2000.

Plus particulièrement, lesdites mèches ou rubans sont à base de fibres de lin ayant un tex (masse linéaire exprimée en tex) allant de 10 à 10000 et de préférence de 100 à 4000 et plus préférentiellement de 500 à 1500.

Ledit procédé selon l'invention peut comprendre au moins une série supplémentaire d'étapes d'imprégnation selon i) et de séchage selon ii), après une première série d'étapes d'imprégnation selon i) et de séchage selon ii), avec dans le cas où ladite dispersion de polymère est différente de celle de la série précédente, c'est-à-dire différente par la nature dudit polymère avec ledit polymère restant compatible audit polymère de la série précédente ou différente par le taux dudit polymère qui est le même, des passages successifs dans un bain d'imprégnation par immersion différent ou dans un dispositif de pulvérisation avec une dispersion différente et dans un système différent de séchage. Sinon, dans le cas où ladite dispersion reste la même, passage en au moins une boucle dans le même bain d'imprégnation par immersion ou dans le même dispositif de pulvérisation et dans le même système de séchage de la première série d'étapes.

Selon une autre variante, le procédé selon l'invention peut comprendre une étape supplémentaire d'imprégnation et de revêtement à l'état fondu, après ladite étape de séchage ii) par un polymère à l'état fondu, ledit polymère étant différent mais compatible avec ledit polymère de ladite dispersion aqueuse et de préférence ledit polymère fondu étant déposé à l'état fondu par passage desdites mèches ou desdits rubans à travers une filière d'extrudeuse, avec en option après refroidissement selon étape iv), passage dans un système de réduction de la taille desdites fibres ainsi traitées.

L'étape i) d'imprégnation par immersion peut être réalisée en continu ou en discontinu avec un temps de séjour variable dans ledit bain d'immersion et d'imprégnation qui est ajustable en fonction du taux de polymère visé, ce qui signifie que, plus le temps de séjour est court, plus le taux de polymère est faible par rapport au poids sec desdites fibres. Un temps de séjour limite peut être défini au bout duquel le taux de polymère imprégné atteint une limite pour une température donnée d'imprégnation qui peut varier de l'ambiante (20°C)jusqu'à 70°C. Plus préférentiellement, ladite imprégnation est réalisée en continu et, dans ce cas, le temps de séjour variera avec la vitesse de passage dans le bain d'immersion et la longueur dudit bain d'immersion. De manière analogue, ladite imprégnation peut se réaliser par pulvérisation de ladite dispersion aqueuse dans un dispositif de pulvérisation comportant un pulvérisateur, avec ladite pulvérisation pouvant également être réalisée en continu et le taux de polymère pouvant être ajusté par le temps de séjour dans ce dispositif de pulvérisation, par le débit de pulvérisation dudit dispositif et par l'extrait sec de ladite dispersion.

Concernant l'étape ii) de séchage, lesdits moyens de chauffage de ladite étape ii) peuvent être choisis parmi : rayonnement infrarouge (IR), microondes, induction ou par four avec extraction de l'eau, étuve à air pulsé ou par calandrage sur rouleaux chauffants. L'étape de refroidissement permet la consolidation finale des fibres, avant éventuel embobinage des mèches ou rubans ainsi traités. Finalement, selon l'invention, on laisse refroidir les mèches ou rubans pour finir la consolidation des fibres, avant éventuel embobinage.

Plus particulièrement, ledit procédé peut comprendre une étape de mise en forme desdites fibres sous forme d'un ruban d'une largeur inférieure à 2000 mm, de préférence inférieure à 200 mm et en particulier comprise entre 3 et 50 mm.

En effet, suivant l'utilisation finale de la mèche ou du ruban, une filière de calibration peut être utilisée dans ledit procédé, laquelle filière conforme ou calibre ledit ruban ou mèche aux dimensions souhaitées pour ladite utilisation.

Selon une option avantageuse, ledit procédé tel que défini ci-haut peut être intégré en continu dans une ligne de fabrication de matériaux composites. Cette ligne peut ainsi comprendre une ligne d'imprégnation et de consolidation desdites fibres de renfort, selon le procédé de l'invention, alimentant en continu le renfort fibreux dans la fabrication des matériaux composites.

Un autre objet couvert par l'invention concerne les fibres naturelles imprégnées, en particulier fibres de lin imprégnées, telles qu'obtenues ou pouvant s'obtenir par un procédé d'imprégnation tel que défini ci-avant selon l'invention.

Plus particulièrement, elles comprennent comme liant de consolidation au coeur du faisceau desdites fibres (liant entre elles lesdites fibres) le polymère tel que défini dans les dispersions selon l'invention, en particulier le copolyamide semi-cristallin tel que défini ci-haut et de préférence à un taux en poids sec de polymère par rapport auxdites fibres + polymère allant de 0,5 à 10%.

Ces fibres ainsi traitées peuvent êtres ainsi utilisées comme des fibres de renfort pour composites, en particulier pour composites thermoplastiques, de préférence pour matrice thermoplastique polyamide, plus préférentiellement pour matrice polyamide à base de PA 11, PA10.10 et PA 6.10 et PA 10.1/6.1.

Ces fibres peuvent également se présenter sous forme d'assemblages de fibres, tissés ou non tissés, monodirectionnels (unidirectionnels ou UD) ou bidirectionnels ou en 3D (y compris multiaxiaux) ou sous forme de préformes.

Un autre objet de l'invention concerne l'utilisation des fibres obtenues par le procédé tel que défini ci-haut ou des fibres telles que définies ci-avant, dans la fabrication de pièces en matériaux composites avec un renfort fibreux à base desdites fibres et une matrice polymère à base d'un polymère thermoplastique ou thermodurcissable, en particulier compatible avec ledit polymère de ladite dispersion aqueuse.

L'invention couvre également des matériaux composites renforcés par des fibres naturelles qui comprennent des fibres obtenues par ledit procédé des fibres telles que définies ci-avant.

Finalement, l'invention couvre des produits finis qui sont des articles, en particulier des pièces moulées, renforcés par des fibres naturelles, où lesdites fibres sont obtenues par ledit procédé ou sont telles que définies ci-haut.

Les exemples suivants sont présentés à titre d'illustration de l'invention et de ses performances et ne limitent en rien sa portée.

### 1 - EXEMPLES

Pour faire le traitement d'imprégnation par une solution aqueuse de copolyamide, on a fabriqué 10 I de plusieurs solutions (dispersions aqueuses de copolyamide) dans un réacteur de laboratoire.

Les copolyamides utilisés sont les produits commerciaux d'Arkema Platamid®2592 et Platamid® 1657.

Leurs caractéristiques essentielles sont présentées au tableau I ci-dessous.

**Tableau I**

| Platamid® | Température de fusion | Fonctionnalité COOH (µeq/g) |
|---|---|---|
| 2592 | 102 | 220 |
| 1657 | 107 | 180 |

Ces produits ont été introduits sous forme de poudre sèche dans une solution d'eau avec de la soude (1% par rapport au Platamid®). L'extrait sec (ES) final est de 30%.

Les réactifs sont chargés dans le réacteur, puis le milieu est inerté à l'azote. Les réactifs sont mis en chauffe dans le but d'atteindre la température de 150°C matière. Cette phase de chauffe est réalisée sous agitation à 1000 rpm. Entre 100 et 120°C, le milieu devient homogène, blanc et opaque. Le milieu est maintenu 30 min sous agitation à 1000 rpm à 150°C, puis refroidi sous une agitation à 300 rpm. Les dispersions obtenues sont fluides, blanches et opaques.

La granulométrie (taille des particules) des poudres a été mesurée au moyen d'observations réalisées par Microscopie Electronique à Balayage et également en utilisant la méthode de granulométrie par diffraction laser. Les 2 types de mesures sont concordants. Les données indiquées dans le tableau ci-dessous ont été obtenues avec la méthode de granulométrie par diffraction laser.

La taille de particules, la viscosité et l'extrait sec des dispersions utilisées sont présentés au tableau II ci-dessous.

**Tableau II**

| REF essai | Platamid® de la dispersion | Diamètre moyen en nombre des particules (nm) | Viscosité Brookfield* à 23°C (mPa.s) | Extrait sec dispersion (%) |
|---|---|---|---|---|
| EP-063 | Platamid® 2592 | 80 | 30 | 30 |
| EP-064 | Platamid® 1657 | 140 | 20 | 30 |

| | | | | |
|---|---|---|---|---|
| la mesure a été faite avec un spindle n°1 à 60 rpm. | | | | |

Ces dispersions aqueuses ainsi préparées ont ensuite été utilisées sur la ligne de traitement des fibres de lin, sous forme non diluée ou diluée.

Sauf pour l'exemple 7 où la méthode d'imprégnation est spécifiée, dans tous les autres cas (à défaut de spécification particulière pour chaque exemple), ladite imprégnation a été réalisée par pulvérisation en ligne (en continu) à l'aide d'un dispositif pulvérisateur (spray) avec un temps de séjour sous le jet dudit pulvérisateur de 1 s environ. Le séchage est réalisé par chauffage avec un dispositif IR. Le refroidissement est réalisé à l'air libre.

La 1^{ère} série d'essais a été réalisée sur un roving (mèches de fibres) de lin de fort titrage ou grammage de 2190 tex, avec différents traitements :
Contre-exemple 1 : mèche non imprégnée de 2190 tex
Exemple 1 : EP-063 ND : imprégnation avec une solution non diluée (ES : 30%) de Platamid® 2592.
Exemple 2 : EP-063 D50 : imprégnation avec une dispersion diluée à 50% de Platamid® 2592 (ES : 15%).
Exemple 3 : EP-064 ND : imprégnation avec une dispersion non diluée de Platamid® 1657 (ES : 30%).
Exemple 4 : EP-064 D50 : imprégnation avec une dispersion diluée à 50% de Platamid® 1657 (ES : 15%).

La 2^{ème} série d'essais a été réalisée sur roving de lin de faible titrage (1030 tex) ayant subi un traitement avec le Platamid® 1657, à différents taux d'imprégnation.
Contre-exemple 2 : mèche de faible titrage non imprégnée (0% de polymère).
Exemple 5 : imprégnation avec une solution diluée d'un facteur 4 avec ES : 7,5%.
Exemple 6 : imprégnation 2 fois de suite (2 passages) avec la dispersion de l'exemple 5.
Exemple 7 : imprégnation par immersion (trempage) dans la dispersion aqueuse avec un temps de séjour plus long (10 s).

### 2 - PROPRIETES MECANIQUES EN TRACTION

### 2.1 - Conditions de test

- Echantillons non conditionnés
- Température : 23°C

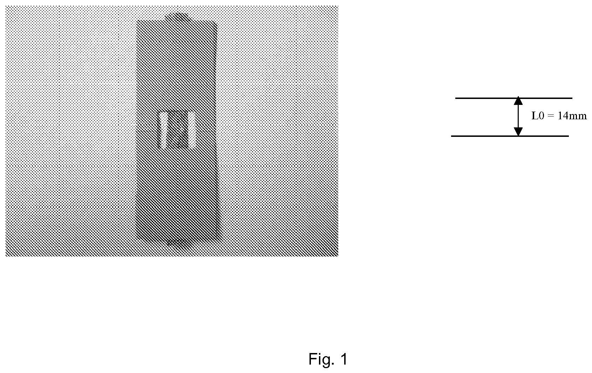

Le roving de lin est collé (avec colle Loctite® 401) sur un cadre en carton (selon Figure 1). La longueur de référence L0 a été choisie à 14 mm, sachant que la longueur moyenne d'une fibre de lin est d'environ 30 mm. Les bords supérieurs et inférieurs du carton sont serrés entre les mors du dynamomètre (machine Zwick) tandis que les bords latéraux sont coupés. Le roving est alors sollicité en traction à une vitesse de 1 mm/min (déplacement de la traverse).

### 2.2 - Résultats

Afin de comparer les rovings faiblement imprégnés de résine (jusqu'à 10% de polymère), on mesure la force à la rupture des différents échantillons testés. Les résultats sont présentés au tableau III ci-dessous.

**Tableau III**

| Référence | Contre-exemple 1 | Exemple 1 | Exemple 2 | Exemple 3 | Exemple 4 |
|---|---|---|---|---|---|
| Type d'imprégnation | Non imprégné | EP63-ND | EP63-D50 | EP64-ND | EP64-D50 |
| Taux de résine (% poids) | 0 | 2-10% | 2-10% | 2-10% | 2-10% |
| Nb échantillons | 5 | 8 | 5 | 5 | 5 |
| Force moyenne à la rupture (N) | 443 | 775 | 723 | 888 | 770 |
| Ecart type | 33 | 98 | 68 | 23 | 73 |

On montre dans le tableau III que l'imprégnation par une dispersion de copolyamide permet d'augmenter très significativement la force à la rupture de la mèche de fibres de lin.

Les deux dispersions donnent des résultats similaires et dans le sens d'une consolidation (exemples 2 et 3 par opposition au contre-exemple 1), ce qui démontre que la dispersion de consolidation proposée fonctionne, y compris pour des dilutions de 50% (ce qui correspond à un extrait sec de 15%).

Dans le tableau IV ci-dessous, on donne le résultat des différentes imprégnations avec le Platamid® 1657 et une mèche de faible grammage ou titrage (1030 tex). On constate qu'avec une dilution d'un facteur 4 avec extrait sec final de 7,5%, on obtient une force à rupture équivalente à celle obtenue avec le roving de fort titrage (2190 tex) non imprégné (comparaison de l'exemple 5 avec le contre-exemple 1) : on a ainsi démontré que l'utilisation d'une dispersion de copolyamide tel que défini ci-haut a permis d'utiliser une mèche de fibre de lin de titrage divisé par 2 par rapport à la mèche initiale (1030 tex contre 2190 tex), tout en conservant environ la même résistance mécanique (environ même force à la rupture).

On montre en outre, qu'en faisant plusieurs passages d'imprégnation (par pulvérisation) avec la même dispersion, on augmente le taux de copolyamide dans la mèche finale (comparaison entre exemples 5 et 6).

Pour finir, on montre par un essai d'imprégnation par immersion (trempage) avec un temps de pulvérisation beaucoup plus long (10 s), qu'il est possible d'imprégner la mèche avec près de 40% (en poids) de copolyamide (exemple 7). Ce taux correspond à un taux de résine (polymère) rencontré dans des renforts pré imprégnés usuels, permettant de faire ainsi directement des pièces composites par exemple par thermocompression, sans opération d'imprégnation supplémentaire du renfort fibreux.

On démontre ainsi la possibilité avec le procédé selon l'invention de réaliser directement un semi-produit composite de type pré imprégné prêt à l'emploi.

**Tableau IV**

| Référence | Contre-exemple 2 | Exemple 5 | Exemple 6 | Exemple 7 |
|---|---|---|---|---|
| Type d'imprégnation | Non imprégné | Produit dilué d'un facteur 4 (ES : 7,5%) | Produit dilué d'un facteur 4 (ES : 7,5%) avec 2 passages | Imprégnation par immersion de 10 s |
| Taux de polymère (% poids / fibre + polymère) | 0 | 2,7 | 5,3 | 39,8 |
| Nb échantillons | 5 | 5 | 5 | 3 |
| Force moyenne à la rupture (N) | 202 | 449 | 549 | 948 |
| Ecart type | 15 | 49 | 65 | 49 |

## Revendications

1. Procédé d'imprégnation en ligne de mèches ou de rubans de fibres naturelles en particulier de fibres de lin par une dispersion aqueuse de polymère comprenant au moins un polymère amorphe ou semi-cristallin et si amorphe avec une Tg allant de 50°C à 175°C, de préférence de 80°C à 150°C mesurée à l'aide d'un calorimètre différentiel à balayage (DSC), après un deuxième passage en chauffe, suivant la norme ISO 11357-2, la vitesse de chauffage et de refroidissement est de 20° C/min, et si semi-cristallin avec une température de fusion allant de 70°C à moins de 220°C, de préférence supérieure à 90°C et jusqu'à 190°C, plus préférentiellement de 100°C à 170°C, mesurée par DSC, après une première chauffe, selon la norme ISO 11357-3, la vitesse de chauffage et de refroidissement sont de 20°C/min, ladite dispersion comprenant un taux en poids dudit polymère allant de 5% à 50% avec des particules en dispersion ayant une taille moyenne en nombre inférieure à 10000 nm, de préférence allant de 50 à 5000 nm et plus préférentiellement de 50 à 500 nm, mesurée selon méthode par diffraction laser (Coulter LS600) ou par microscopie à balayage électronique, **caractérisé en ce qu'**il comprend au moins les étapes successives suivantes :
i) imprégnation desdites mèches ou desdits rubans desdites fibres par immersion dans un bain contenant ladite dispersion aqueuse fine de polymère ou par pulvérisation de ladite dispersion aqueuse, ladite imprégnation étant suivie du
ii) séchage desdites mèches ou desdits rubans au moyen d'un système de chauffage, avec au cours dudit séchage l'élimination progressive de l'eau et au fur et à mesure la fusion dudit polymère, l'enrobage desdites mèches ou rubans par ledit polymère fondu incorporé au coeur du faisceau des fibres desdites mèches ou desdits rubans, liant entre elles lesdites fibres,
iii) en option, mise en forme finale desdites mèches ou rubans ainsi traités, de préférence sous forme aplatie de rubans unidirectionnels ou de mèches de section cylindrique ou sous forme de tissus pré imprégnés ou sous forme d'assemblage de rubans, en particulier pour faire des préformes,
iv) refroidissement desdites mèches ou desdits rubans ainsi traités.

2. Procédé selon la revendication 1, **caractérisé en ce que** ledit polymère est choisi parmi : (co)polyamides, (co)polyesters, polyuréthanes, poly(méth)acrylates, polymères fluorés ou polyoléfines.

3. Procédé selon la revendication 2, **caractérisé en ce que** ledit polymère est choisi parmi un poly(méth)acrylate (y compris copolymères) fonctionnalisé par des fonctions acides ou un polymère fluoré (y compris copolymères) greffé avec des fonctions réactives et que ladite dispersion aqueuse est une dispersion aqueuse obtenue par polymérisation en émulsion en présence d'un tensioactif et que lesdites fonctions réactives peuvent réagir avec lesdites fibres naturelles et plus particulièrement avec les fibres de lin.

4. Procédé selon la revendication 2, **caractérisé en ce que** ledit polymère est un polyuréthane formé à partir d'un prépolymère polyisocyanate comprenant un groupement ionique, dispersé dans l'eau avec extension de chaîne en milieu aqueux.

5. Procédé selon la revendication 1 ou 2, **caractérisé en ce que** ledit polymère est dispersible (ou dispersé) sous forme de poudre en milieu aqueux sans tensioactif et de préférence ledit polymère à l'état de poudre porte des groupements ioniques ou des groupements précurseurs de groupements ioniques, en particulier par neutralisation dans l'eau lors de la préparation de ladite dispersion.

6. Procédé selon la revendication 5, **caractérisé en ce que** ledit polymère est un copolyamide, de préférence porteur de groupements terminaux carboxy, sulfoniques ou de groupements terminaux amines, plus préférentiellement ayant un taux desdits groupements allant de 50 à 500 µeq/g, en particulier de 100 à 250 µeq/g.

7. Procédé selon la revendication 6, **caractérisé en ce que** ledit copolyamide porte des groupements amines, de préférence amines primaires, neutralisés sous forme d'ammonium par un acide, de préférence acide de Bronsted, plus préférentiellement phosphoré.

8. Procédé selon la revendication 6, **caractérisé en ce que** ledit copolyamide porte des groupements carboxy neutralisés, sous forme de sel, par une base.

9. Procédé selon l'une des revendications 6 à 8, **caractérisé en ce que** ledit copolyamide est semi-cristallin avec une température de fusion inférieure ou égale à 150°C.

10. Procédé selon l'une des revendications 6 à 9, **caractérisé en ce que** ledit copolyamide comprend au moins un des motifs suivants : 5.9, 5.10, 5.12, 5.13, 5.14, 5.16, 5.18, 5.36, 6, 6.9, 6.10, 6.12, 6.13, 6.14, 6.16, 6.18, 6.36, 9, 10.6, 10.9, 10.10, 10.12, 10.13, 10.14, 10.16, 10.18, 10.36, 11, 12, 12.6, 12.9, 12.10, 12.12, 12.13, 12.14, 12.16, 12.18, 12.36, 6.6/6, 11/10.10 et leurs mélanges et de préférence comprend au moins un motif parmi 11, 12, 10.10, 6, 6.10, 6.12, 10.12, 6.14 et/ou 6.6/6, 11/10.10 et leurs mélanges.

11. Procédé selon l'une des revendications 6 à 9, **caractérisé en ce que** ledit polymère est un copolyamide choisi parmi : PA 6/6.6/12, PA 6/6.6/11/12, PA 6/12, PA 6.9/12, PA Pip.9/Pip.12/11, PA 6/IPD.6/12, PA IPD.9/12, PA6/MPMD.12/12, PA 6/6.12/12, PA 6/6.10/12, PA 6/Pip.12/12, PA 6/6.6/6.10/6.I, PA 6.10/Pip.10/Pip.12, PA 6/11/12, PA Pip.12/12, PA IPD.10/12, PA Pip.10/12, PA 6/11, PA Pip.10/11/Pip.9, PA 6/6.6/6.10, PA 6/6.10/6.12 et leurs mélanges.

12. Procédé selon l'une des revendications 6 à 9, **caractérisé en ce que** ledit polyamide est amorphe semi-aromatique et correspond aux formules suivantes :
- 6I, 8.I, 9.I, 10.I, 11.I, 12.I, 6.I/9.I, 9.I/10.I, 9.I/11.I, 9.I/12.I, 9/6.1, 10/6.I, 11/6.I,12:6.I, 10/9.1, 10/10.1, 10/11.1, 10/12.1, 11/9.1, 11/10.1, 11/11.I, 11/12.I, 12/9.1, 12/10.I, 12/11.I, 12/12.I, 6.10/6.I, 6.12/6.I, 9.10/6.I, 9.12/6.I, 10.10/6.I, 10.12/6.I, 6.10/9.I, 6.12/9.I, 10.1/6.I, 10.10/9.I, 10.12/9.I, 6.10/10.I, 6.12/10.I, 9.10/10.I, 9.12/10.I, 10.10/10.I, 10.12/10.I, 6.10/12.I, 6.12/12.I, 9.10/12.I, 9.12/12.I, 10.10/12.I, 11/6.1/9.I, 11/6.I/10.I, 11/6.I/11.1I 11/6.I/12.I, 11/9.I/10.I, 11/9.I/11.I, 11/9.I/12.I, 11/10.I/11.I, 11/10.I/12.I, 11/11.I/12.I, 6.I/10.I, 6.I/11.I, 6.I/12.I, 10.I/11.I, 10.I/12.I, 11.I/12.I, 12/6.I/10.I, 12/6.I/11.I, 12/6.I/12.I, 12/9.I/10.I, 12/9.I/11.I, 12.9.I/12.I, 12/10.I/11.I, 12/10.I12.I, 12/11.I/12.I, 12/11.I/12.I,
- polyamides terpolymères précédents avec 12/ remplacé par 9/, 10/, 6.10/, 6.12/, 10.6/, 10.10/, 10.12/, 9.10/et 9.12/,
- tous les polyamides cités ci-haut, avec l'isophtalique (I) remplacé partiellement jusqu'à 40% mol par le téréphtalique (T), le naphtalène 2,6 dicarboxylique et/ou par le 1,3- ou le 1,4- CHDA (acide cyclohexane dicarboxylique), avec tout ou partie des diamines aliphatiques linéaires pouvant être remplacées par des diamines aliphatiques ramifiées, de préférence parmi triméthyl hexaméthylènediamine TMD, méthyl pentaméthylenediamine MPMD, méthyloctaméthylènediamine (MOMD) ou par des diamines cycloaliphatiques, de préférence parmi BMACM, BACM et/ou IPD ou des diamines arylaliphatiques, de préférence m- ou p-xylylène diamines,
- tous les polyamides cités ci-haut où l'isophtalique (I) est remplacé partiellement ou totalement par un diacide aliphatique linéaire ou ramifié en C₆ à C₁₈ et en même temps avec remplacement total ou partiel de la diamine aliphatique par une diamine cycloaliphatique parmi BMACM, BACM et/ou IPD.

13. Procédé selon l'une des revendications 1 à 12, **caractérisé en ce que** ledit polymère est semi-cristallin avec une température de fusion Tf supérieure à 90°C, de préférence d'au moins 100°C et que les particules de ladite dispersion ont une taille moyenne en nombre allant de 50 à 5000 nm et de préférence de 50 à 500 nm.

14. Procédé selon l'une des revendications 1 à 13, **caractérisé en ce que** le taux en poids sec dudit polymère par rapport au poids sec desdites fibres varie de 0,5% à moins de 50%.

15. Procédé selon la revendication 14, **caractérisé en ce que** ledit taux en poids varie de 0,5 à 10% et que ladite imprégnation se limite à la consolidation desdites fibres entre elles, en plus d'un ensimage.

16. Procédé selon la revendication 14, **caractérisé en ce que** ledit taux est supérieur à 25% et inférieur à 50%, de préférence de 30% à 45% et que ladite imprégnation en plus de ladite consolidation conduit à un pré imprégné desdites fibres utilisé ou utilisable séparément ou successivement dans la fabrication de matériaux composites.

17. Procédé selon l'une des revendications 1 à 16, **caractérisé en ce que** la viscosité de ladite dispersion à 23°C varie de 10 à 1000 mPa.s, telle que mesurée selon la méthode Brookfield (viscosité Brookfield selon ISO 2555).

18. Procédé selon l'une des revendications 1 à 17, **caractérisé en ce que** ledit polymère est biosourcé et en particulier est un (co)polyamide à base de monomères biosourcés.

19. Procédé selon l'une des revendications 1 à 18, **caractérisé en ce que** lesdites fibres sont des fibres longues, en particulier des fibres longues de lin avec L/D > 2000.

20. Procédé selon l'une des revendications 1 à 19, **caractérisé en ce que** lesdites mèches ou rubans sont à base de fibres de lin ayant un tex allant de 10 à 10000, de préférence de 100 à 4000 et plus préférentiellement de 500 à 1500.

21. Procédé selon l'une des revendications 1 à 20, **caractérisé en ce qu'**il comprend au moins une série supplémentaire d'étapes d'imprégnation selon i) et de séchage selon ii) après une première série d'étapes d'imprégnation selon i) et de séchage selon ii), avec dans le cas où ladite dispersion de polymère est différente de celle de la série précédente, c'est-à-dire différente par la nature dudit polymère mais avec ledit polymère restant compatible audit polymère de la série précédente ou différente par le taux dudit polymère qui est le même, des passages successifs dans un bain d'imprégnation par immersion différent ou dans un dispositif de pulvérisation avec une dispersion différente et dans un système différent de séchage.

22. Procédé selon l'une des revendications 1 à 20, **caractérisé en ce qu'**il comprend au moins une série supplémentaire d'étapes d'imprégnation selon i) et de séchage selon ii) après une première série d'étapes d'imprégnation selon i) et de séchage selon ii), avec dans le cas où ladite dispersion reste la même, passage en au moins une boucle dans le même bain d'imprégnation ou dans le même dispositif de pulvérisation et dans le même système de séchage de la première série d'étapes.

23. Procédé selon la revendication 15, **caractérisé en ce qu'**il comprend en plus une étape supplémentaire d'imprégnation et de revêtement à l'état fondu, après ladite étape de séchage ii) par un polymère à l'état fondu, ledit polymère étant différent mais compatible avec ledit polymère de ladite dispersion aqueuse et de préférence ledit polymère est déposé à l'état fondu par passage desdites mèches ou desdits rubans à travers une filière d'extrudeuse, avec en option après refroidissement selon étape iv), passage dans un système de réduction de la taille desdites fibres ainsi traitées.

24. Procédé selon l'une des revendications 1 à 23, **caractérisé en ce que** lesdits moyens de chauffage de ladite étape de séchage ii) sont choisis parmi : rayonnement infrarouge (IR), microondes, induction ou par four avec extraction de l'eau, étuve à air pulsé ou par calandrage sur rouleaux chauffants.

25. Procédé selon l'une des revendications 1 à 24, **caractérisé en ce que** ledit procédé comprend une étape de mise en forme desdites fibres sous forme d'un ruban d'une largeur inférieure à 2000 mm, de préférence inférieure à 200 mm et en particulier comprise entre 3 et 50 mm.

26. Procédé selon l'une quelconque des revendications 1 à 25, **caractérisé en ce qu'**il est intégré en continu dans une ligne de fabrication de matériaux composites.

27. Fibres naturelles imprégnées, en particulier fibres de lin, **caractérisées en ce qu'**elles sont obtenues par un procédé d'imprégnation tel que défini selon l'une des revendications 14 à 16.

28. Fibres selon la revendication 27, **caractérisées en ce qu'**elles comprennent comme liant de consolidation au coeur du faisceau desdites fibres, liant entre elles lesdites fibres, le polymère tel que défini dans l'une des revendications 1 à 12, en particulier le copolyamide semi-cristallin tel que défini dans l'une des revendications 6 à 12 et de préférence à un taux en poids sec de polymère par rapport auxdites fibres + polymère allant de 0,5 à 10%.

29. Fibres selon la revendication 27 ou 28, **caractérisées en ce qu'**elles sont des fibres de renfort pour composites, en particulier pour composites thermoplastiques, de préférence pour matrice thermoplastique polyamide, plus préférentiellement pour matrice polyamide à base de PA 11, PA10.10 et PA 6.10 et PA 10I/6.I.

30. Fibres selon l'une des revendications 27 à 29, **caractérisées en ce qu'**elles sont sous forme d'assemblages de fibres, tissés ou non tissés, monodirectionnels (UD) ou bidirectionnels ou en 3D ou sous forme de préformes.

31. Utilisation des fibres telles que définies selon l'une des revendications 27 à 30, dans la fabrication de pièces en matériaux composites avec un renfort fibreux à base desdites fibres et une matrice polymère à base d'un polymère thermoplastique ou thermodurcissable, en particulier compatible avec ledit polymère de ladite dispersion aqueuse.

32. Matériaux composites renforcés par des fibres naturelles, **caractérisés en ce qu'**ils comprennent des fibres telles que définies selon l'une quelconque des revendications 27 à 30.

33. Articles, en particulier pièces moulées, renforcés par des fibres naturelles, **caractérisés en ce que** lesdites fibres sont telles que définies selon l'une quelconque des revendications 27 à 30.

## Patentansprüche

1. Verfahren zum Imprägnieren von Strängen oder Bändern aus Naturfasern, insbesondere Flachsfasern, im Durchlauf mit einer wässrigen Polymerdispersion, umfassend mindestens ein amorphes oder semikristallines Polymer mit, wenn es amorph ist, einer Tg von 50°C bis 175°C, vorzugsweise von 80°C bis 150°C, gemessen mithilfe eines Differentialscanningkalorimeters (DSC) nach einem zweiten Erhitzungsdurchgang gemäß der Norm ISO 11357-2, wobei die Aufheiz- und Abkühlgeschwindigkeit 20°C/min beträgt, und, wenn es semikristallin ist, einer Schmelztemperatur von 70°C bis weniger als 220°C, vorzugsweise von mehr als 90°C und bis zu 190°C, noch stärker bevorzugt von 100°C bis 170°C, gemessen mittels DSC nach einem ersten Erhitzen gemäß der Norm ISO 11357-3, wobei die Aufheiz- und Abkühlgeschwindigkeit 20°C/min beträgt, wobei die Dispersion einen Gewichtsanteil des Polymers von 5% bis 50% mit Teilchen in Dispersion, deren Zahlenmittel der Größe weniger als 10000 nm, vorzugsweise von 50 bis 5000 nm und stärker bevorzugt von 50 bis 500 nm, gemessen nach dem Laserdiffraktionsverfahren (Coulter LS600) oder mittels Rasterelektronenmikroskopie, beträgt, umfasst, **dadurch gekennzeichnet, dass** es mindestens die folgenden aufeinanderfolgenden Schritte umfasst:
i) Imprägnieren der Stränge oder der Bänder aus den Fasern durch Tauchen in ein Bad, das die feine wässrige Polymerdispersion enthält, oder durch Zerstäuben der wässrigen Dispersion, wobei auf die Imprägnierung Folgendes folgt
ii) Trocknen der Stränge oder der Bänder mithilfe eines Heizsystems, wobei im Verlauf des Trocknens die allmähliche Entfernung des Wassers und das schrittweise Schmelzen des Polymers erfolgt, wobei die Umhüllung der Stränge oder Bänder mit dem geschmolzenen Polymer, das in das Innere des Faserbündels der Stränge oder der Bänder eingebracht wird, diese Fasern untereinander verbindet,
iii) gegebenenfalls die endgültige Formung der so behandelten Stränge oder Bänder, vorzugsweise in eine abgeflachte Form unidirektionaler Bänder oder Stränge mit zylindrischem Querschnitt oder in Form von vorimprägnierten Geweben oder in Form einer Zusammenlagerung von Bändern, insbesondere zur Herstellung von Vorformlingen,
iv) Abkühlen der so behandelten Stränge oder Bänder.

2. Verfahren nach Anspruch 1, **dadurch gekennzeichnet, dass** das Polymer aus Folgenden ausgewählt ist: (Co)Polyamiden, (Co)Polyestern, Polyurethanen, Poly(meth)acrylaten, fluorierten Polymeren oder Polyolefinen.

3. Verfahren nach Anspruch 2, **dadurch gekennzeichnet, dass** das Polymer aus einem Poly(meth)acrylat (einschließlich Copolymeren), das mit Säurefunktionen funktionalisiert ist, oder einem fluorierten Polymer (einschließlich Copolymeren), das mit reaktiven Funktionen gepfropft ist, ausgewählt wird und dass die wässrige Dispersion eine wässrige Dispersion ist, die durch Emulsionspolymerisation in Gegenwart eines Tensids erhalten wird, und dass die reaktiven Funktionen mit den Naturfasern und insbesondere mit den Flachsfasern reagieren können.

4. Verfahren nach Anspruch 2, **dadurch gekennzeichnet, dass** das Polymer ein Polyurethan ist, das ausgehend von einem in Wasser dispergierten Polyisocyanat-Präpolymer, das eine ionische Gruppe umfasst, mit Kettenverlängerung in wässrigem Medium hergestellt wird.

5. Verfahren nach Anspruch 1 oder 2, **dadurch gekennzeichnet, dass** das Polymer in Form von Pulver in wässrigem Medium ohne Tensid dispergierbar (oder dispergiert) ist und das Polymer vorzugsweise im Pulverzustand ionische Gruppen oder Vorläufergruppen von ionischen Gruppen trägt, insbesondere durch Neutralisation in Wasser während der Herstellung der Dispersion.

6. Verfahren nach Anspruch 5, **dadurch gekennzeichnet, dass** das Polymer ein Copolyamid ist, das vorzugsweise endständige Carboxy-, Sulfongruppen oder endständige Amingruppen trägt, stärker bevorzugt einen Anteil an diesen Gruppen von 50 bis 500 µÄqu./g, insbesondere von 100 bis 250 µÄqu./g aufweist.

7. Verfahren nach Anspruch 6, **dadurch gekennzeichnet, dass** das Copolyamid neutralisierte Amingruppen, vorzugsweise primäre Amine, in Form von Ammonium durch eine Säure, vorzugsweise eine Bronsted-Säure, stärker bevorzugt eine phosphorhaltige Säure trägt.

8. Verfahren nach Anspruch 6, **dadurch gekennzeichnet, dass** das Copolyamid Carboxygruppen trägt, die durch eine Base in Form des Salzes neutralisiert sind.

9. Verfahren nach einem der Ansprüche 6 bis 8, **dadurch gekennzeichnet, dass** das Copolyamid semikristallin mit einem Schmelzpunkt von weniger als oder gleich 150°C ist.

10. Verfahren nach einem der Ansprüche 6 bis 9, **dadurch gekennzeichnet, dass** das Copolyamid mindestens eines der folgenden Motive umfasst: 5.9, 5.10, 5.12, 5.13, 5.14, 5.16, 5.18, 5.36, 6, 6.9, 6.10, 6.12, 6.13, 6.14, 6.16, 6.18, 6.36, 9, 10.6, 10.9, 10.10, 10.12, 10.13, 10.14, 10.16, 10.18, 10.36, 11, 12, 12.6, 12.9, 12.10, 12.12, 12.13, 12.14, 12.16, 12.18, 12.36, 6.6/6, 11/10.10 und deren Gemische und vorzugsweise mindestens ein Motiv aus 11, 12, 10.10, 6, 6.10, 6.12, 10.12, 6.14 und/oder 6.6/6, 11/10.10 und deren Gemische umfasst.

11. Verfahren nach einem der Ansprüche 6 bis 9, **dadurch gekennzeichnet, dass** das Polymer ein Copolyamid ist, ausgewählt aus: PA 6/6.6/12, PA 6/6.6/11/12, PA 6/12, PA 6.9/12, PA Pip.9/Pip.12/11, PA 6/IPD.6/12, PA IPD.9/12, PA 6/MPMD.12/12, PA 6/6.12/12, PA 6/6.10/12, PA 6/Pip.12/12, PA 6/6.6/6.10/6.I, PA 6.10/Pip.10/Pip.12, PA 6/11/12, PA Pip.12/12, PA IPD.10/12, PA Pip.10/12, PA 6/11, PA Pip.10/11/Pip.9, PA 6/6.6/6.10, PA 6/6.10/6.12 und deren Gemischen.

12. Verfahren nach einem der Ansprüche 6 bis 9, **dadurch gekennzeichnet, dass** das Polyamid amorph semiaromatisch ist und den folgenden Formeln entspricht:
- 6.I, 8.I, 9.I, 10.I, 11.I, 12.I, 6.I/9.I, 9.I/10.I, 9.I/11.I, 9.I/12.I, 9/6.I, 10/6.I, 11/6.I, 12/6.I, 10/9.I, 10/10.I, 10/11.I, 10/12.I, 11/9.I, 11/10.I, 11/11.I, 11/12.I, 12/9.I, 12/10.I, 12/11.I, 12/12.I, 6.10/6.I, 6.12/6.I, 9.10/6.I, 9.12/6.I, 10.10/6.I, 10.12/6.I, 6.10/9.I, 6.12/9.I, 10.I/6.I, 10.10/9.I, 10.12/9.I, 6.10/10.I, 6.12/10.I, 9.10/10.I, 9.12/10.I, 10.10/10.I, 10.12/10.I, 6.10/12.I, 6.12/12.I, 9.10/12.I, 9.12/12.I, 10.10/12.I, 11/6.I/9.I, 11/6.I/10.I, 11/6.I/11.I, 11/6.I/12.I, 11/9.I/10.I, 11/9.I/11.I, 11/9.I/12.I, 11/10.I/11.I, 11/10.I/12.I, 11/11.I/12.I, 6.I/10.I, 6.I/11.I, 6.I/12.I, 10.I/11.I, 10.I/12.I, 11.I/12.I, 12/6.I/10.I, 12/6.I/11.I, 12/6.I/12.I, 12/9.I/10.I, 12/9.I/11.I, 12.9.I/12.I, 12/10.I/11.I, 12/10.I/12.I, 12/11.I/12.I, 12/11.I/12.I,
- den vorhergehenden Terpolymer-Polyamiden, in denen 12/ durch 9/, 10/, 6.10/, 6.12/, 10.6/, 10.10/, 10.12/, 9.10/ und 9.12/ ersetzt ist,
- sämtlichen vorstehend genannten Polyamiden, wobei Isophthalsäure (I) partiell bis zu 40 Mol-% durch Terephthalsäure (T), Naphthalin-2,6-dicarbonsäure und/oder durch 1,3- oder 1,4-CHDA (Cyclohexandicarbonsäure) ersetzt ist, wobei die gesamten oder ein Teil der geraden aliphatischen Diamine durch verzweigte aliphatische Diamine, vorzugsweise aus Trimethylhexamethylendiamin TMD, Methylpentamethylendiamin MPMD, Methyloctamethylendiamin (MOMD), oder durch cycloaliphatische Diamine, vorzugsweise aus BMACM, BACM und/oder IPD, oder arylaliphatische Diamine, vorzugsweise m- oder p-Xyloldiamine, ersetzt werden können,
- sämtlichen vorstehend genannten Polyamiden, wobei Isophthalsäure (I) partiell oder vollständig durch eine gerade oder verzweigte aliphatische C₆- bis C₁₈-Disäure ersetzt ist, unter gleichzeitigem vollständigen oder partiellen Ersetzen des aliphatischen Diamins durch ein cycloaliphatisches Diamin aus BMACM, BACM und/oder IPD.

13. Verfahren nach einem der Ansprüche 1 bis 12, **dadurch gekennzeichnet, dass** das Polymer semikristallin mit einem Schmelzpunkt Schmp von mehr als 90°C, vorzugsweise mindestens 100°C ist und dass die Teilchen der Dispersion ein Zahlenmittel der Größe von 50 bis 5000 nm und vorzugsweise von 50 bis 500 nm aufweisen.

14. Verfahren nach einem der Ansprüche 1 bis 13, **dadurch gekennzeichnet, dass** der Trockengewichtsanteil des Polymers, bezogen auf das Trockengewicht der Fasern, von 0,5% bis weniger als 50% variiert.

15. Verfahren nach Anspruch 14, **dadurch gekennzeichnet, dass** der Gewichtsanteil von 0,5% bis 10% variiert und dass die Imprägnierung sich auf die Verfestigung der Fasern untereinander zusätzlich zu einer Schlichte beschränkt.

16. Verfahren nach Anspruch 14, **dadurch gekennzeichnet, dass** der Anteil größer als 25% und kleiner als 50% ist, vorzugsweise von 30% bis 45% reicht und dass die Imprägnierung zusätzlich zu der Verfestigung zu einem Prepreg der Fasern führt, das getrennt oder anschließend bei der Herstellung von Verbundwerkstoffen verwendet wird oder verwendbar ist.

17. Verfahren nach einem der Ansprüche 1 bis 16, **dadurch gekennzeichnet, dass** die Viskosität der Dispersion bei 23°C von 10 bis 1000 mPa.s, wie gemäß dem Brookfield-Verfahren (Brookfield-Viskosität nach ISO 2555) gemessen, variiert.

18. Verfahren nach einem der Ansprüche 1 bis 17, **dadurch gekennzeichnet, dass** es sich um ein auf nachwachsenden Rohstoffen basierendes Polymer und insbesondere ein (Co)Polyamid auf der Basis von aus nachwachsenden Rohstoffen stammenden Monomeren handelt.

19. Verfahren nach einem der Ansprüche 1 bis 18, **dadurch gekennzeichnet, dass** es sich bei den Fasern um lange Fasern, insbesondere lange Flachsfasern, mit L/D > 2000 handelt.

20. Verfahren nach einem der Ansprüche 1 bis 19, **dadurch gekennzeichnet, dass** die Stränge oder Bänder auf Flachsfasern mit einem tex von 10 bis 10000, vorzugsweise von 100 bis 4000 und stärker bevorzugt von 500 bis 1500 basieren.

21. Verfahren nach einem der Ansprüche 1 bis 20, **dadurch gekennzeichnet, dass** es mindestens eine zusätzliche Abfolge von Schritten der Imprägnierung gemäß i) und der Trocknung gemäß ii) nach einer ersten Abfolge von Schritten der Imprägnierung gemäß i) und der Trocknung gemäß ii) mit, falls die Polymerdispersion von derjenigen der vorhergehenden Abfolge verschieden ist, d. h. hinsichtlich der Art des Polymers anders ist, wobei das Polymer aber mit dem Polymer der vorhergehenden Abfolge kompatibel bleibt, oder sich in dem Anteil des Polymers, welches dasselbe ist, unterscheidet, sukzessiven Durchgängen in einem anderen Tauchimprägnierungsbad oder in einer Zerstäubungsvorrichtung mit einer anderen Dispersion und in einem anderen Trocknungssystem umfasst.

22. Verfahren nach einem der Ansprüche 1 bis 20, **dadurch gekennzeichnet, dass** es mindestens eine zusätzliche Abfolge von Schritten der Imprägnierung gemäß i) und der Trocknung gemäß ii) nach einer ersten Abfolge von Schritten der Imprägnierung gemäß i) und der Trocknung gemäß ii) mit, falls die Dispersion die gleiche bleibt, Hindurchleiten in mindestens einer Schleife in dasselbe Imprägnierungsbad oder in dieselbe Zerstäubungsvorrichtung und in dasselbe Trocknungssystem wie bei der ersten Abfolge von Schritten umfasst.

23. Verfahren nach Anspruch 15, **dadurch gekennzeichnet, dass** es außerdem einen zusätzlichen Schritt der Imprägnierung und der Umhüllung im geschmolzenen Zustand nach dem Trocknungsschritt ii) mit einem Polymer im geschmolzenen Zustand umfasst, wobei das Polymer von dem Polymer der wässrigen Dispersion verschieden, aber damit kompatibel ist und das Polymer vorzugsweise im geschmolzenen Zustand mittels Hindurchleiten der Stränge oder der Bänder durch eine Extrusionsdüse aufgebracht wird, mit gegebenenfalls nach dem Abkühlen gemäß Schritt iv) einem Hindurchleiten durch ein System zur Verringerung der Größe der so behandelten Fasern.

24. Verfahren nach einem der Ansprüche 1 bis 23, **dadurch gekennzeichnet, dass** die Heizmittel des Trocknungsschritts ii) aus Folgenden ausgewählt sind: Infrarotstrahlung (IR), Mikrowellen, Induktion oder mittels Ofen unter Wasserextraktion, Umluftofen oder durch Kalandrieren an beheizbaren Walzen.

25. Verfahren nach einem der Ansprüche 1 bis 24, **dadurch gekennzeichnet, dass** das Verfahren einen Schritt des Formens der Fasern in Form eines Bandes mit einer Breite von weniger als 2000 mm, vorzugsweise weniger als 200 mm und insbesondere zwischen 3 und 50 mm umfasst.

26. Verfahren nach einem der Ansprüche 1 bis 25, **dadurch gekennzeichnet, dass** es im Durchlauf in eine Fertigungslinie für Verbundwerkstoffe integriert ist.

27. Imprägnierte Naturfasern, insbesondere Flachsfasern, **dadurch gekennzeichnet, dass** sie durch eins Imprägnierungsverfahren nach einem der Ansprüche 14 bis 16 erhalten werden.

28. Fasern nach Anspruch 27, **dadurch gekennzeichnet, dass** sie als Verfestigungsbindemittel im Inneren des Faserbündels, das die Fasern untereinander verbindet, das Polymer nach einem der Ansprüche 1 bis 12, insbesondere das semikristalline Copolyamid nach einem der Ansprüche 6 bis 12 und vorzugsweise in einem Trockengewichtsanteil an Polymer, bezogen auf das Gewicht von Fasern + Polymer, von 0,5 bis 10% umfassen.

29. Fasern nach Anspruch 27 oder 28, **dadurch gekennzeichnet, dass** es sich um Verstärkungsfasern für Verbundstoffe, insbesondere für thermoplastische Verbundstoffe, vorzugsweise für thermoplastische Polyamid-Matrix, stärker bevorzugt für Polyamid-Matrix auf der Basis von PA 11, PA 10.10 und PA 6.10 und PA 10I/6.I handelt.

30. Fasern nach einem der Ansprüche 27 bis 29, **dadurch gekennzeichnet, dass** sie in Form von, gewebten oder nicht gewebten, monodirektionalen (UD) oder bidirektionalen oder 3D-Faserzusammenlagerungen oder in Form von Vorformlingen vorliegen.

31. Verwendung der Fasern nach einem der Ansprüche 27 bis 30 bei der Herstellung von Teilen aus Verbundwerkstoffen mit einer Faserverstärkung auf der Basis der Fasern und einer Polymermatrix auf der Basis eines thermoplastischen oder wärmehärtbaren Polymers, das insbesondere mit dem Polymer der wässrigen Dispersion kompatibel ist.

32. Verbundwerkstoffe, die mit Naturfasern verstärkt sind, **dadurch gekennzeichnet, dass** sie Fasern nach einem der Ansprüche 27 bis 30 umfassen.

33. Gegenstände, insbesondere Formteile, die mit Naturfasern verstärkt sind, **dadurch gekennzeichnet, dass** es sich um Fasern nach einem der Ansprüche 27 bis 30 handelt.

## Claims

1. Process for impregnating, on line, rovings or ribbons of natural fibers, in particular of flax fibers with an aqueous polymer dispersion comprising at least one amorphous or semi-crystalline polymer and, in the case of an amorphous polymer, said polymer having a Tg ranging from 50°C to 175°C, preferably from 80°C to 150°C measured by the means of a differential scanning calorimeter (DSC), after a second round of heating, according to standard ISO 11357-2, the heating and cooling rate being 20°C/min, and, in the case of a semi-crystalline polymer, said polymer having a melting point ranging from 70°C to less than 220°C, preferably greater than 90°C and up to 190°C, more preferentially of from 100°C to 170°C, measured by DSC, after a first heating operation, according to standard ISO 11357-3, the heating and cooling rate being 20°C/min, said dispersion comprising a content by weight of said polymer ranging from 5% to 50% with particles in dispersion having a number-average size of less than 10 000 nm, preferably ranging from 50 to 5000 nm and more preferentially from 50 to 500 nm, measured according to the laser diffraction method (Coulter LS600) or by scanning electron microscope,
**characterized in that** it comprises at least the following successive steps:
i) impregnating said rovings or said ribbons of said fibers by immersing in a bath containing a fine aqueous polymer dispersion or by spraying said aqueous dispersion, said impregnating being followed by
ii) drying said rovings or said ribbons by means of a heating system, with, during said drying, the gradual elimination of the water and the melting of said polymer as said drying advances, the coating of said rovings or ribbons with said molten polymer incorporated into the core of the bundle of fibers of said rovings or of said ribbons binding said fibers to one another,
iii) optionally, final forming of said rovings or ribbons thus treated, preferably in the form, which is flattened, of unidirectional ribbons or of rovings with a cylindrical cross section or in the form of pre-impregnated fabrics or in the form of an assembly of ribbons, in particular for producing preforms,
iv) cooling said rovings or said ribbons thus treated.

2. Process according to Claim 1, **characterized in that** said polymer is chosen from: (co)polyamides, (co)polyesters, polyurethanes, poly(meth)acrylates, fluorinated polymers or polyolefins.

3. Process according to Claim 2, **characterized in that** said polymer is chosen from a poly(meth)acrylate (including copolymers) functionalized with acid functions or a fluorinated polymer (including copolymers) grafted with reactive functions and that said aqueous dispersion is an aqueous dispersion obtained by emulsion polymerization in the presence of a surfactant and that said reactive functions can react with said natural fibers and more particularly with flax fibers.

4. Process according to Claim 2, **characterized in that** said polymer is a polyurethane formed from a polyisocyanate prepolymer comprising an ionic group, dispersed in water with chain extension in an aqueous medium.

5. Process according to Claim 1 or 2, **characterized in that** said polymer is dispersible (or dispersed) in powder form in an aqueous medium without surfactant and preferably said polymer in the powder state bears ionic groups or groups that are precursors of ionic groups, in particular by neutralization in water during the preparation of said dispersion.

6. Process according to Claim 5, **characterized in that** said polymer is a copolyamide, preferably bearing sulfonic carboxy end groups or amine end groups, more preferentially having a content of said groups ranging from 50 to 500 µeq/g, in particular from 100 to 250 µeq/g.

7. Process according to Claim 6, **characterized in that** said copolyamide bears amine groups, preferably primary amine groups, neutralized in ammonium form by an acid, preferably a Bronsted acid, which is more preferentially phosphorus-comprising.

8. Process according to Claim 6, **characterized in that** said copolyamide bears carboxy groups which are neutralized in salt form by a base.

9. Process according to one of Claims 6 to 8, **characterized in that** said copolyamide is semi-crystalline with a melting point of less than or equal to 150°C.

10. Process according to one of Claims 6 to 9, **characterized in that** said copolyamide comprises at least one of the following units: 5.9, 5.10, 5.12, 5.13, 5.14, 5.16, 5.18, 5.36, 6, 6.9, 6.10, 6.12, 6.13, 6.14, 6.16, 6.18, 6.36, 9, 10.6, 10.9, 10.10, 10.12, 10.13, 10.14, 10.16, 10.18, 10.36, 11, 12, 12.6, 12.9, 12.10, 12.12, 12.13, 12.14, 12.16, 12.18, 12.36, 6.6/6, 11/10.10 and mixtures thereof, and preferably comprises at least one unit among 11, 12, 10.10, 6, 6.10, 6.12, 10.12, 6.14 and/or 6.6/6, 11/10.10 and mixtures thereof.

11. Process according to one of Claims 6 to 9, **characterized in that** said polymer is a copolyamide chosen from: PA 6/6.6/12, PA 6/6.6/11/12, PA 6/12, PA 6.9/12, PA Pip.9/Pip.12/11, PA 6/IPD.6/12, PA IPD.9/12, PA6/MPMD.12/12, PA 6/6.12/12, PA 6/6.10/12, PA 6/Pip.12/12, PA 6/6.6/6.10/6.I, PA 6.10/Pip.10/Pip.12, PA 6/11/12, PA Pip.12/12, PA IPD.10/12, PA Pip.10/12, PA 6/11, PA Pip.10/11/Pip.9, PA 6/6.6/6.10, PA 6/6.10/6.12 and mixtures thereof.

12. Process according to one of Claims 6 to 9, **characterized in that** said polyamide is semi-aromatic amorphous and corresponds to the following formulae:
- 6.I, 8.I, 9.I, 10.I, 11.I, 12.I, 6.I/9.I, 9.I/10.I, 9.I/11.I, 9.I/12.I, 9/6.I, 10/6.I, 11/6.I,12:6.I, 10/9.I, 10/10.I, 10/11.I, 10/12.I, 11/9.I, 11/10.I, 11/11.I, 11/12.I, 12/9.I, 12/10.I, 12/11.I, 12/12.I, 6.10/6.I, 6.12/6.I, 9.10/6.I, 9.12/6.I, 10.10/6.I, 10.12/6.I, 6.10/9.I, 6.12/9.I, 10.I/6.I, 10.10/9.I, 10.12/9.I, 6.10/10.I, 6.12/10.I, 9.10/10.I, 9.12/10.I, 10.10/10.I, 10.12/10.I, 6.10/12.I, 6.12/12.I, 9.10/12.I, 9.12/12.I, 10.10/12.I, 11/6.I/9.I, 11/6.I/10.I, 11/6.I/11.I, 11/6.I/12.I, 11/9.I/10.I, 11/9.I/11.I, 11/9.I/12.I, 11/10.I/11.I, 11/10.I/12.I, 11/11.I/12.I, 6.I/10.I, 6.I/11.I, 6.I/12.I, 10.I/11.I, 10.I/12.I, 11.I/12.I, 12/6.I/10.I, 12/6.I/11.I, 12/6.I/12.I, 12/9.I/10.I, 12/9.I/11.I, 12.9.I/12.I, 12/10.I/11.I, 12/10.I12.I, 12/11.I/12.I, 12/11.I/12.I,
- the preceding terpolymer polyamides with 12/ replaced with 9/, 10/, 6.10/, 6.12/, 10.6/, 10.10/, 10.12/, 9.10/ and 9.12/,
- all the polyamides mentioned above, with isophthalic (I) partially replaced up to 40 mol% with terephthalic (T), naphthalene-2,6-dicarboxylic and/or with 1,3- or 1,4-CHDA (cyclohexanedicarboxylic acid), with all or some of the linear aliphatic diamines possibly being replaced with branched aliphatic diamines, preferably among trimethylhexamethylenediamine TMD, methylpentamethylenediamine MPMD, methyloctamethylenediamine (MOMD) or with cycloaliphatic diamines, preferably among BMACM, BACM and/or IPD or arylaliphatic diamines, preferably m- or p-xylylenediamines,
- all the polyamides mentioned above where isophthalic (I) is partially or totally replaced with a linear or branched C₆ to C₁₈ aliphatic diacid and at the same time with total or partial replacement of the aliphatic diamine with a cycloaliphatic diamine among BMACM, BACM and/or IPD.

13. Process according to one of Claims 1 to 12, **characterized in that** said polymer is semi-crystalline with a melting point Mp greater than 90°C, preferably of at least 100°C, and that the particles of said dispersion have a number-average size ranging from 50 to 5000 nm and preferably from 50 to 500 nm.

14. Process according to one of Claims 1 to 13, **characterized in that** the content by dry weight of said polymer relative to the dry weight of said fibers ranges from 0.5% to less than 50%.

15. Process according to Claim 14, **characterized in that** said content by weight ranges from 0.5% to 10% and that said impregnation is limited to the consolidation of said fibers to one another, in addition to sizing.

16. Process according to Claim 14, **characterized in that** said content is greater than 25% and less than 50%, preferably from 30% to 45% and that said impregnation in addition to said consolidation results in a prepreg of said fibers that is used or can be used separately or successively in the manufacture of composite materials.

17. Process according to one of Claims 1 to 16, **characterized in that** the viscosity of said dispersion at 23°C ranges from 10 to 1000 mPa.s, as measured according to the Brookfield method (Brookfield viscosity according to ISO 2555).

18. Process according to one of Claims 1 to 17, **characterized in that** said polymer is biobased and in particular is a (co)polyamide based on biobased monomers.

19. Process according to one of Claims 1 to 18, **characterized in that** said fibers are long fibers, in particular long flax fibers with L/D > 2000.

20. Process according to one of Claims 1 to 19, **characterized in that** said rovings or ribbons are based on flax fibers having a tex ranging from 10 to 10 000, preferably from 100 to 4000 and more preferentially from 500 to 1500.

21. Process according to one of Claims 1 to 20, **characterized in that** it comprises at least one additional series of steps of impregnating according to i) and of drying according to ii) after a first series of steps of impregnating according to i) and of drying according to ii), with, in the case where said polymer dispersion is different than that of the preceding series, i.e. different in terms of the nature of said polymer but with said polymer remaining compatible with said polymer of the preceding resin or different in terms of the content of said polymer which is the same, successive passes through a different immersion impregnation bath or through a spraying device with a different dispersion and through a different drying system.

22. Process according to one of Claims 1 to 20, **characterized in that** it comprises at least one additional series of steps of impregnating according to i) and of drying according to ii) after a first series of steps of impregnating according to i) and of drying according to ii), with, in the case where said dispersion remains the same, passing in at least one loop in the same impregnation bath or in the same spraying device and in the same drying system of the first series of steps.

23. Process according to Claim 15, **characterized in that** it also comprises an additional step of impregnating and of coating in the molten state, after said drying step ii), with a polymer in the molten state, said polymer being different than but compatible with said polymer of said aqueous dispersion and preferably said polymer is deposited in the molten state by passing said rovings or said ribbons through an extruder die, with optionally, after cooling according to step iv), passing through a system for reducing the size of said fibers thus treated.

24. Process according to one of Claims 1 to 23, **characterized in that** said heating means of said drying step ii) are chosen from: infrared (IR) radiation, microwaves, induction or by an oven with water extraction, pulsed-air oven or by calendering on heating rolls.

25. Process according to one of Claims 1 to 24, **characterized in that** said process comprises a step of forming said fibers in the shape of a ribbon with a width of less than 2000 mm, preferably less than 200 mm and in particular of between 3 and 50 mm.

26. Process according to any one of Claims 1 to 25, **characterized in that** it is continuously integrated into a composite material manufacturing line.

27. Impregnated natural fibers, in particular flax fibers, **characterized in that** they are obtained by means of an impregnation process as defined in one of Claims 14 to 16.

28. Fibers according to Claim 27, **characterized in that** they comprise, as consolidation binder at the core of the bundle of said fibers, binding said fibers to one another, the polymer as defined in one of Claims 1 to 12, in particular the semi-crystalline copolyamide as defined in one of Claims 6 to 12 and preferably at a content by dry weight of polymer relative to said fibers + polymer ranging from 0.5% to 10%.

29. Fibers according to Claim 27 or 28, **characterized in that** they are reinforcing fibers for composites, in particular for thermoplastic composites, preferably for a polyamide thermoplastic matrix, more preferentially for a polyamide matrix based on PA 11, PA10.10 and PA 6.10 and PA 10I/6.I.

30. Fibers according to one of Claims 27 to 29, **characterized in that** they are in the form of monodirectional (UD) or bidirectional or 3D, woven or nonwoven, fiber assemblies or in the form of preforms.

31. Use of the fibers as defined in one of Claims 27 to 30, in the manufacture of parts made of composite materials with a fibrous reinforcement based on said fibers and a polymer matrix based on a thermoplastic or thermosetting polymer, in particular compatible with said polymer of said aqueous dispersion.

32. Composite materials reinforced with natural fibers, **characterized in that** they comprise fibers as defined in any one of Claims 27 to 30.

33. Articles, in particular molded parts, reinforced with natural fibers, **characterized in that** said fibers are as defined in any one of Claims 27 to 30.
